# EUROPEAN PATENT SPECIFICATION

(11) **EP 1 021 320 B1**
(45) Date of publication and mention of the grant of the patent: **09.11.2005**
(21) Application number: 98948260.9
(22) Date of filing: 17.09.1998
(51) Int. Cl.: B60R 27/00, B60R 19/20, B60N 2/06, B60N 2/42, B62D 21/15, B62D 25/20

(54) **EASY EJECTOR SEAT AND INDO-SKELETAL CRASH SAFETY BEAM**
LEICHT AUSZUSTOSSENDER SITZ SOWIE ENDO-SKELETTALER BALKEN ZUM SCHUTZ VON UNFÄLLEN
SYSTEME DE SIEGE S'EJECTANT FACILEMENT ET STRUCTURE ENDO-SQUELETTIQUE DE SECURITE CONTRE L'ACCIDENT

(30) Priority: 24.09.1997 US 936626
(43) Date of publication of application: 26.07.2000
(73) Proprietor: Rajasingham, Arjuna Indraeswaren, Dr., 103 34 Stockholm (SE)
(72) Inventor: Rajasingham, Arjuna Indraeswaren, Dr., 103 34 Stockholm (SE)
(86) International application number: PCT/US1998/019260
(87) International publication number: WO 1999/015379

(56) References cited:
- WO-A-95/35226
- DE-A- 4 212 091
- GB-A- 2 300 391
- US-A- 2 148 950
- US-A- 2 710 222
- US-A- 2 753 947
- US-A- 2 758 872
- US-A- 3 071 407
- US-A- 3 822 076
- US-A- 3 944 277
- US-A- 4 533 172
- US-A- 4 815 777
- US-A- 4 995 659
- US-A- 5 000 509
- US-A- 5 131 703
- US-A- 5 464 266
- US-A- 5 660 428
- US-A- 5 671 968
- US-A- 5 725 265

## Description

The present invention relates to an Easy Ejector Seat and Indo-Skeletal Crash Safety Beam.

In the past safety of passengers was not always the priority in passenger vehicle design. In the evolution of motor vehicle design the structure moved from a chassis that held together the mechanical components of the vehicle - a structure that was a then attached to a passenger compartment or to passenger seats. The design of the structure was to hold together the working components of the vehicle a critical aspect at the time. Thereafter in more recent times right up to the present, Exo-skeletal designs have been the dominant paradigm. Here "Shells" were constructed to hold both the mechanical components and the passengers. Over the last several years however, the safety considerations for passengers has become of paramount importance. Vehicle designers -- particularly automobile designers - have risen admirably to the task by incorporating myriads of devices and additions within the Shell paradigm to minimize risk in the event of collisions. Such devices include restraints such as seat belts and protective air bags. However, there are limits within the Shell paradigm. Inherently, Shell structures require high shear or bending strength to withstand compressive loads on impact resulting in a need for higher mass or weight of the vehicle. This in turn reflects on cost and the energy efficiency of the vehicle. These factors often result in compromises on the structural rigidity of the Shell. The present invention aims to provide a design structure for motor vehicles to address this problem.

A related issue is that of passenger comfort in the evolution of passenger vehicles that have evolved from animal drawn carriages. In the history of motor vehicle design there has always been a requirement for passengers to climb into the vehicle to get to the travelling or operating position. This may be difficult particularly for the elderly and the disabled, and for infants and small children (who need to be installed in special protective car seats). A second aspect preferably provides a new paradigm for passenger vehicles that allows passengers to mount and dismount easily with ejectors.

Moreover the invention seeks to emphasize the synergies that are drawn from these shifts in structural design embodied in the two aspects and provides a preferred illustrative embodiment.

DE-A-4 212 091 relates to a car seat mounting which includes a sliding facility with shaped guides, to move the upper part of the seat mounting sideways. The lateral movement is locked by a catch operated by a lateral impact following crush to the side of the vehicle.

US-A-5 000 509 relates to a safety device for a motor vehicle comprising an impact-resistant, low-deformation body part and a support structure adjacent to the low-deformation body part attached to the vehicle body. Impact energy resulting from a side impact may be transferred through the vehicle by engagement of the low-deformation body part with the support structure.

US-A-3 071 407 relates to a rear passenger seat that may be moved transversely of the axis of a motor vehicle, with the entire seat outside the normal sidewalls of the body of the vehicle.

US-A-2 758 872 relates to a laterally-movable seat adapted to be reciprocated through a body doorways of a vehicle.

GB-A-2 300 391 relates to a vehicle safety system including a seat and a seat mounting with rigidly mounted shock absorbers to damp shocks from front, rear or side impact. The seat has deployable head rests, but the seat is fixed and does not move to enable access.

US-A-5 464 266 relates to a motor vehicle in which impact elements are provided in side body parts of the vehicle, which serve to contribute to transverse stiffness of the vehicle by absorbing the impact energy and transferring collision forces to the vehicle floor structure.

US-A-4 995 659 relates to a shock absorber for a car, comprising a plurality of tubular air sheets in which pressed air of helium gas is filled.

According to the present invention there is in a related aspect provided a vehicle structure as defined in Claim 1. In a further aspect of the invention there is provided a method as defined in Claim 47.

Preferred features are defined in the dependent claims.

The present invention aims to provide a new passenger vehicle structural design with two related aspects. The first of these aspects is the Indo-Skeletal structure for passenger motor vehicle design whose principle design feature is to provide protection to passengers in side or lateral impacts in collisions using an internal frame rather than a "shell" structure. The second aspect is the "Easy Ejector" seat structure for motor vehicles that provides utilitarian and safety related value in passenger access to vehicles.

While motor vehicle movement can be controlled in the forward and backward directions there is little or no control of motor vehicle movement in the lateral direction. Therefore while sophisticated vehicle speed controls and other innovations may be designed to protect passengers in head on or tail end collisions, passengers are very vulnerable in lateral collisions. This invention seeks to address this need while concurrently providing a structural design for easy access to the vehicle for passengers.

Several dependent claims further qualify the independent claims. Moreover in the description section, a preferred embodiment is disclosed to synergisticaliy embody the structural attributes of both aspects with several parts of the device playing dual roles in the embodiment thereby demonstrating the synergies in these related aspects and the value of the invention.

This invention seeks for the first time to transfer the focus of the structural design of passenger motor vehicles to the key interests of passengers - safety and comfort from designs that cater for this need secondary to the mechanical functioning of the vehicle.

The following describes the attached drawings. These drawings aid visualization of the inventions but are clearly not intended to provide an exhaustive set of embodiments of the invention.

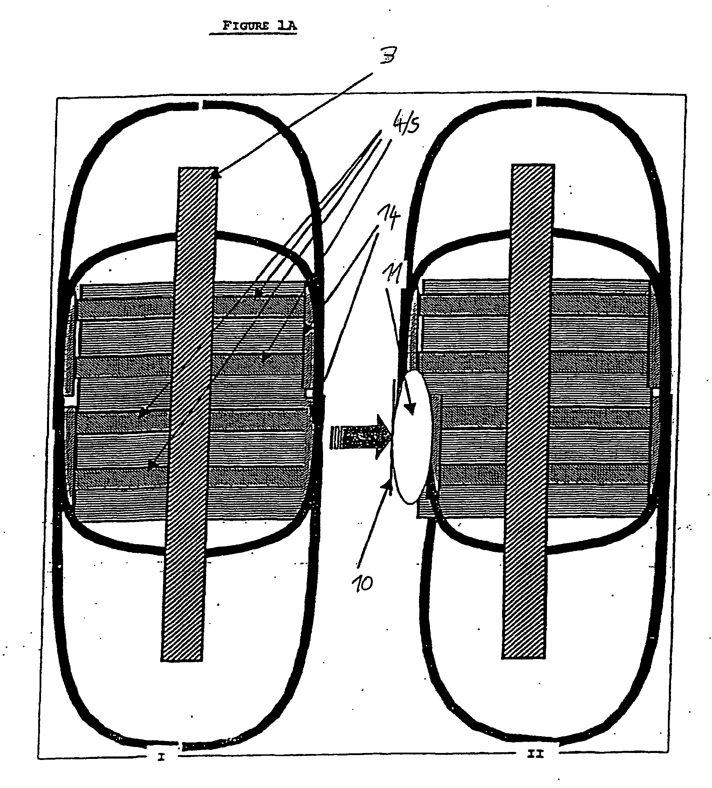

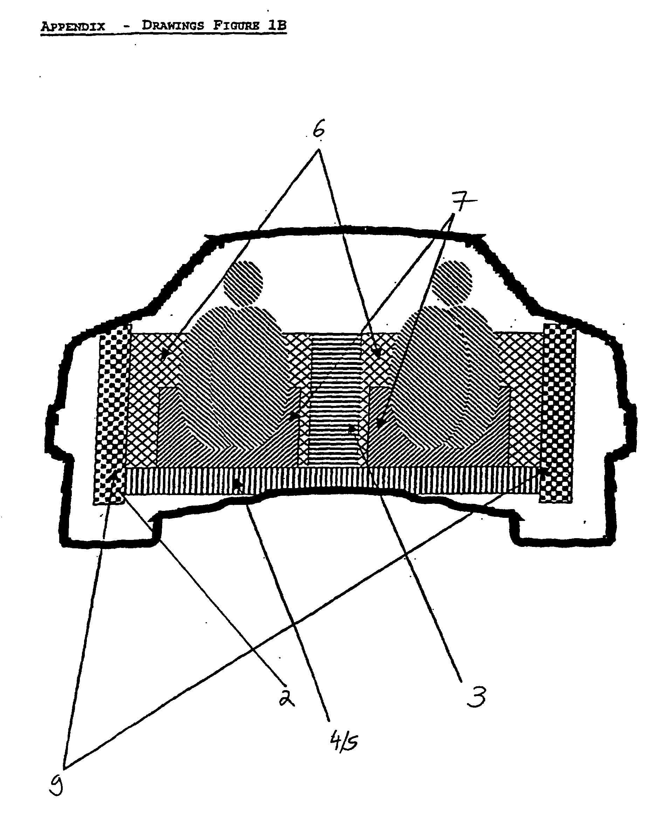

Figure 1A illustrates the structure in the first aspect. The Indoskeltal Frame, is constituted by the Central members and possibly the floorboard of the vehicle (3). Lateral rigidity is provided by the Safety Beam elements that may or may not be a part of the slide mechanism (4,5). Impact protection is provided by the side impact shock absorbers (4) which may include External Airbags (11) which in turn may require perforation shields (10).
The normal situation is depicted in the illustration I and the situation under impact is illustrated in II.
Figure 1B, illustrates the Easy Ejector with Indo-Skeletal Crash Safety Beam with the positioning of passengers. Here Item 9 represents the Protector shield and the external airbags. Item 14 represents the Shock Absorbers and the Slide Beam (4) hand Easy Ejector slide (5) in the locked position. Item 6 is an auxiliary Safety Beam mounted on the Ejector slide and locked into position with the Ejector Slide in the operating position. In other embodiments this Safety Beam can be a part of the fixed structure with the outside end of the beam engaging the Shock Absorbers and the Protector Shield. The Passenger seat is represented by Item 7 and the Central body frame represented by Item 3.

Figure 1C illustrates the effect of impact on Figure 1B. In the event of an impact that imposes accelerations that cannot be withstood by the human body despite the shock absorbers, the impact side seat (7) decouples from the ejector slide (4,5), and the Ejector Slide and the Auxiliary Safety beam (6) along. with the Shock Absorber (14) and the Protector Shield (9) on the further side of the vehicle unlock and both the seats are free to eject to the extent necessary to avoid crushing injury. The bulk of the Impact is borne by the compressed shock absorbers (14) the Slide (4,5) and Safety Beam (6), and the main body elements of the vehicle Items 3.

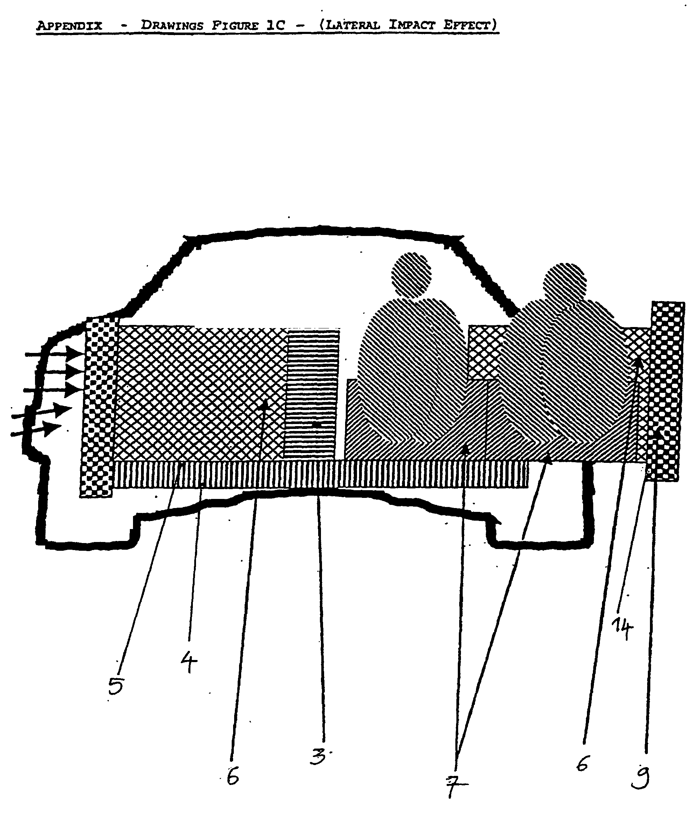

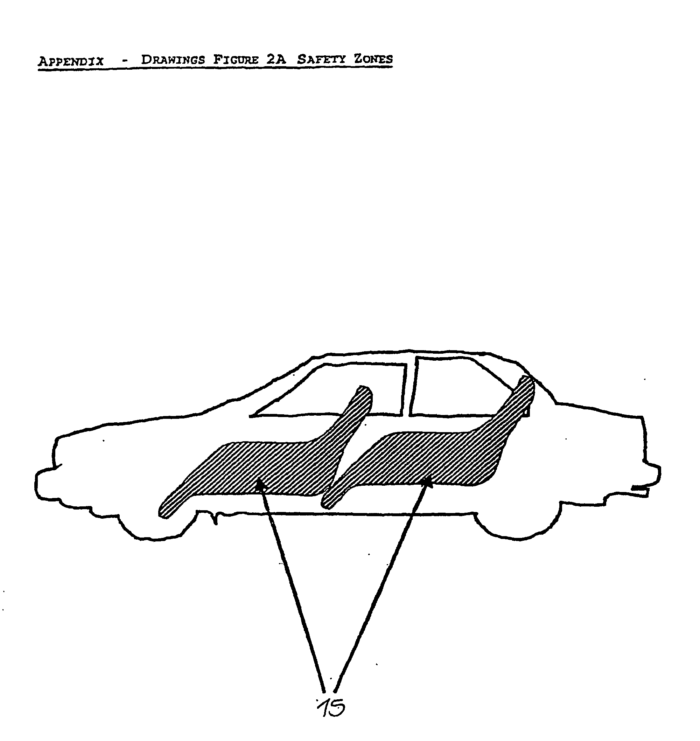

Figure 2A illustrates the "Safety Zones" that the design of the vehicle will meet. These safety zones (15) will target the profiles of the passengers. Other regions will have minimal protection to reduce vehicle weight.

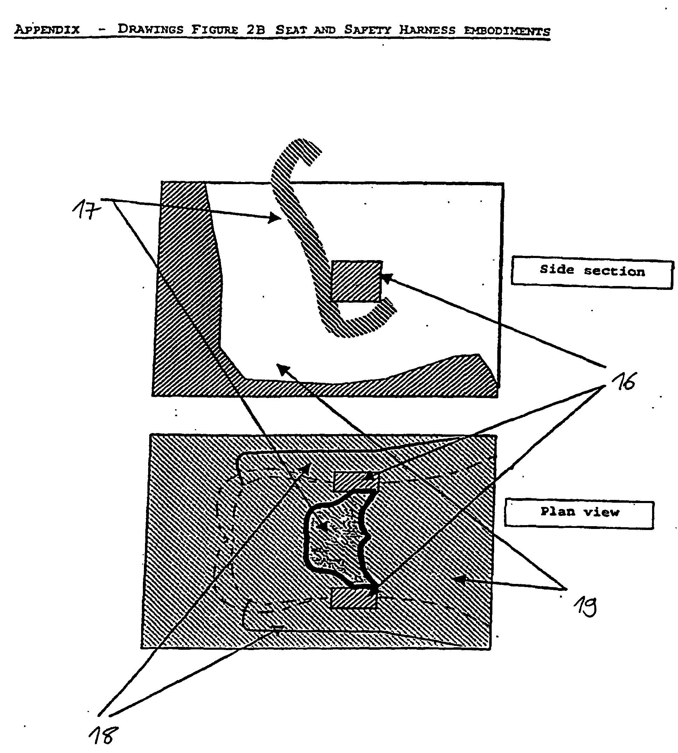

Figure 2B illustrates an embodiment of the seats. A side sectional view and a Plan view of the seat is provided with a safety harness that is unique to this invention.
Items 16 represent the mounting brackets for the safety harness. The mount on the internal side may be hinged to open upwards while the mount on the external side may be locked in the operating position. It may also be installed on the fixed members of the vehicle so that the seat slides in under the harness and locks in place.
Item 17 is the safety harness that may be of a semi rigid material that provides support for the entire upper body in a head on collision.
Features of the seat may include contoured armrests (18) and body cavity (19).

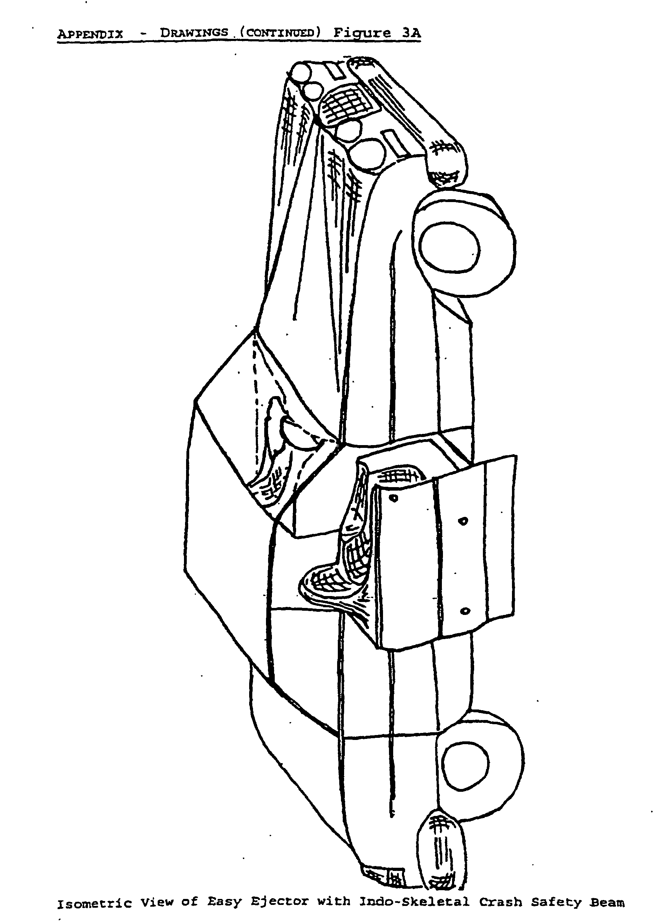

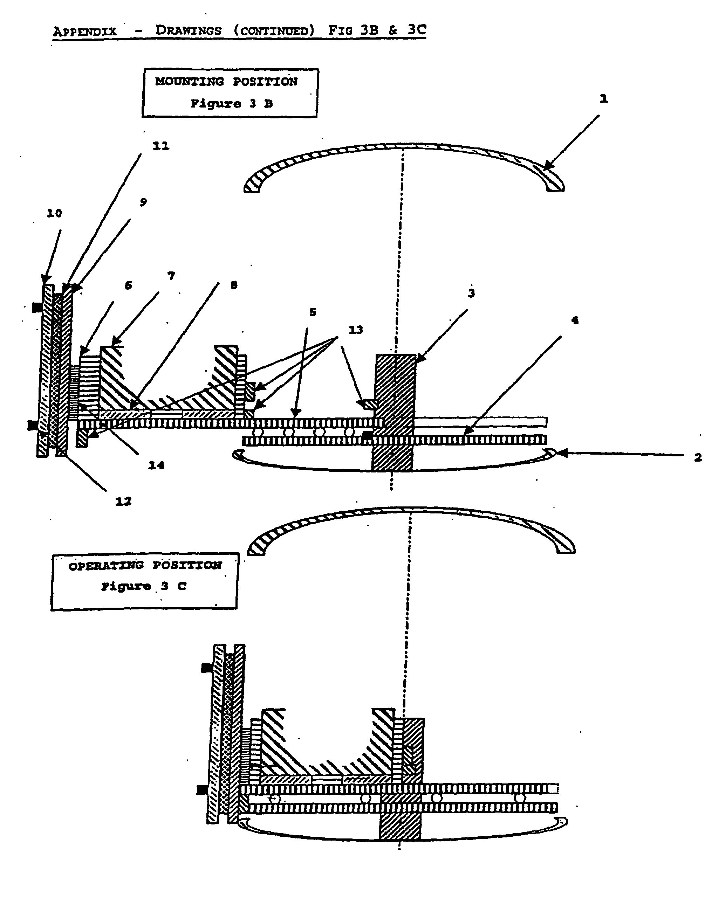

Figure 3A is an isometric view of an embodiment.

Figures 3 B&C illustrate the sectional elevation the structural design of this invention in its preferred embodiment.
The Body of the vehicle Item 1 and Item 2 is shown along with an embodiment of the device in schematic section both in the mounting position and the operating position. The "B" figure illustrates the device in the extended position. The "C" figure illustrates the operating position. In particular these figures illustrate the ejector mechanism that may be a slide structure Items 4 and 5 in Figures 3 B & C, on which is mounted the passenger seat - item 7 in figures 3 B & C.

Item 3 represents the main structural member of the skeletal frame. Item 4 is the lower slide for the ejector seat - the Slide Beam, Item 5 is the upper slide of the ejector seat - The Ejector Slide. In the operating position these slide together and the Safety Beam - Alternatively the Safety Beam can be a fixed member of the Skeletal Frame that locks into the Shock Absorber and the Protector Shield in the operating position. Item 6, locks with the Skeletal Frame with the locking device - Items 13. The seat - Item 7 is contoured for comfort and will have all the movement and positioning capabilities of a conventional vehicle seat in the operating position. It is connected to the Ejector slide through impact decouplers items 8. These decouplers may in some embodiments be designed as secondary slides that when decoupled under impact, guide the seats and passengers out of the vehicle. The Shock Absorbers -Item 14 are fixed to the Ejector Slide and the Safety Beam on one side and the Protector Shield -Item 9. The External Air Bags are located between the Protector Shield and the Perforation Shield - Item 10 and are activated with the velocity detectors - Item 12.

The Indo Skeletal Structure is an innovation that pioneers a new paradigm in automobile and other passenger vehicle design using a safety driven "Indo-skeletal" (internal skeleton) frame rather than present day "exo-skeletal" or shell based bodies that are inherently weaker under compressive loads encountered in collisions. It is distinct from early period automobile design in that the skeletal structures are safety oriented rather than focussed on the mechanical functioning of the vehicle. It is notable that the Safety Endo-skeletal design captures the evolution in structural priorities in the more developed living organisms. The Easy Ejector aspect (second aspect) provides an ergonomically utilitarian, easy and comfortable approach to mount and dismount from motor vehicles. The passenger seats are ejected outside the body of the vehicle for ease of mounting and dismounting with slides or extension arms, and moved into the operating or travelling position when desired. Moreover in the event of a lateral collision it provides the mechanism to eject passengers if necessary to prevent crush injuries. The Easy Ejector is particularly suitable for automobiles and smaller passenger vehicles. Its utilitarian value in this regard is particularly notable for the elderly, the disabled, and infants.

Notably, the two main aspects are related in that there are significant synergies in their combined embodiment. The use of the Easy Ejector paradigm along with the indo-Skeletal Structure utilizing many of the structural elements for both purposes, provide utilitarian access to the motor vehicle and reduces the risk of injury to drivers and passengers in side impact collisions (lateral collisions) in all types of motor vehicles. While motor vehicle movement can be controlled in the forward and backward directions there is little or no control of motor vehicle movement in the lateral direction. Therefore while sophisticated vehicle speed controls and other innovations may be designed to protect passengers in head on or tail end collisions, passengers are very vulnerable in lateral collisions. This device addresses this need while providing easy access to the vehicle for passengers.
The First aspect (please refer to Figure 1A) provides a new paradigm for vehicle design structures - The Safety Indo-Skeletal structure or internal skeletal structure. Here the Internal structural members are designed principally for safety of the passengers, and together form a protective structure particularly for lateral impact. The design of the structure will transfer the impact in collisions directly through compressive members and compressive shock absorbers of the structure to the components of the vehicle with high mass, and thereby protect the passengers. The structure uses members that will be under compressive rather than under shear loads permitting the use of lighter material requirements to withstand the same forces as in conventional designs on impact. In many embodiments conventional shock absorbers and air bags will be used in conjunction with the rigid members in compression to absorb the energy of impact. In some embodiments the shock absorbers and air bags may be proactively fired (with strategically placed sensors) or reactive as in conventional designs. Overall this will provide greater safety for passengers for the same vehicle weight.

The Safety Indo-Skeletal structure for passenger vehicle design identifies targeted "impact zones" (Please refer to Figure 2A) that could affect passengers and provides a path for transferring the energy of such encountered impact directly to the high mass components of the vehicle through compression bearing rigid and shock absorbing elements, thereby protecting the passengers from the impact and compressive loads of such collisions. Passengers while a part of the inertial mass of the vehicle are decoupled from the transfer of the energy to the remainder of the vehicle. The transfer of energy takes place through structural members under compressive load in the skeletal structure. In most embodiments the design will have shock absorbers placed at locations where impact affecting passengers is likely to occur. Shock absorbers in some embodiments may be proactive (with suitable lateral velocity and distance sensors) or reactive (as in conventional design).
The design of the structure targets safety of passengers in lateral or side impact collisions. The structure has the following characteristics:
A. Targets potential impact zones in lateral or side collisions that could affect passenger safety. (As in Figure 2A)
B. Incorporates a skeletal structure that provides compressive load bearing members both rigid and shock absorbing that protect the impact zones identified in the above paragraph. (See Figure 1 A,B)
C. Achieve a structurally minimal (in weight) design to achieve the safety goals of the last paragraph, thereby minimizing vehicle mass possibly with lower weight body shell materials. Structural rigidity achieved by the inherent design of components that bear compressive loads, rather than shell structures that bear shear or bending loads. This can result in lighter weight materials in construction resulting in potentially lower cost and energy consumption of the vehicle.

The second aspect provides a new paradigm for access to motor vehicles. The customary approach for mounting and dismounting contemporary motor vehicles is by entering a door and then easing ones self into a seat that is fixed (such seats may allow limited forward and backward adjustments but no significant lateral movement) . This aspect. The Easy Ejector, slides or extends the seat out of the vehicle allowing the passenger(s) to sit comfortably in the seat and then be moved into the travelling or operating position, automatically or with minimal manual effort. The reverse process is followed to dismount from the vehicle. The structure permits the design of passenger seats that provide support on all sides of the passenger (including the exit side). This is not available in contemporary motor vehicles. Moreover this facilitates provision of rigid protective sides to the seat that will protect the passenger in a collision. The door of the vehicle may or may not be a part of the integrated device or structure.

The following description of an embodiment provides utilitarian properties of the two aspects - the Easy Ejector, along with the safety attribute of the Safety Indo-Skeletal structure and other preferred features.Deviations from this description in an embodiment is possible.

The device includes Shock absorbers at the outer extreme of each Ejector Beam coupled with the rigid structure of the Easy Ejector Beam Slide (locked with the chassis when the vehicle is in motion). The outer face of the shock absorber (Protector shield) will cover a great part of the passenger side profile and may even extend as a (fixed or retractable) "Safety Cage" over the passenger. In some embodiments this Protector Shield may be hinged to exit the vehicle if desired without using the ejector mechanism. The seat is mounted on the Easy Ejector Beam Slide with mechanical decoupling in the event of impact. This slide also provides the Indo-Skeletal member that protects the passenger. This dual role reduces required mass of the vehicle to perform these functions. The function of the vehicle door will in most embodiments be reduced to a "Perforation Shield" ( as noted below), its cosmetic value in the design of the vehicle, and its weather protection attributes. Lateral velocity and distance detectors may be mounted on the Perforation shield (and the Safety shield) to detect possible side collisions to activate external airbags. Such airbags may be mounted between the safety shield and the Perforation shield. As the Easy Ejector provides protection by withstanding compressive loads through the Ejector Slide, the Slide Beam and the Auxiliary Safety Beam, rather than provide protection through resistance to a shear load as in shell structures in conventional car bodies, lightweight materials may be used as a substitute for the strength members in the vehicle design.
The following is a detailed description of some of the components of this embodiment.

### The Slide Beam

The Slide Beam has the dual characteristics of providing a utilitarian approach for mounting and dismounting motor vehicles, and providing protection in side impact or lateral collisions because of its strength under compression. The Slide Beam supports the ejector Slide which has freedom in lateral motion.

### Easy Ejector Slide and Auxiliary Safety Beam

The slide provides the lateral movement for the seat at the time of mounting and dismounting from the vehicle. It may be used in conjunction with ball bearing or roller mechanisms. In addition in the locked position it provides the dual function of side impact protection. This protection is enhanced with an Auxiliary Safety Beam as noted earlier the Safety Beam may also be a fixed element of the Skeletal Structure that is locked to the shock absorbers and the protector shield in the operating position. which is mounted on the Ejector Slide possibly behind the passenger seat, In the operating position, it is locked to the frame as is the Slide

### Easy Ejector Seat

### Comfort features

The Easy ejector seat will have all the movement and cushioning features of conventional vehicle seats. However in addition it may be contoured to provide integrated lumbar and side support on both sides of the body - a feature that is not possible in conventional seats as free access on the door side is required in such designs. In conventional designs the door surface provides the only support on the external side surface which are usually limited to arm rests.
The lower cost embodiments may have only the lower seat with the lumbar side supports ejecting, whereas more expensive embodiments may have the entire seat ejecting.

The "Custom contoured seats" customized for each passenger may be created with surround inserts to cradle the entire lower body in the ejector seat. Similarly child seats may be designed to protect children (see below). Changes in this structure may be made.

### Safety features of the seat

### Mechanical decoupling

The seat will be mechanically decoupled from the Easy Ejector Slide for impact protection. While the decoupled seat will remain rigidly supported by the locked slide under normal operation conditions significant shocks - normally unsustainable by the human body -- will decouple the slide from the seat to allow the slide to convey the impact energy to the main structural members of the vehicle while allowing the seats independent movement that could result in ejection on the further side of the vehicle (away from the impact). The seat decouplers may be designed as secondary slides on the Ejector Slide.

### Safety Harness

The easy Ejector may have conventional seat belts or a safety harness that locks over the lap after mounting. This can be manually locked in place with a hinged structure that locks over the lap or may be part of the fixed anchor of the Easy ejector such that the seat positions itself under and locks into the harness. The harness may be constructed of pliable but semi-rigid material (such as high strength nylon) to provide support in a head on collision.

### Easy Ejector Slide Support

For larger vehicles where there is more than one seat on a slide, and there is a longer movement required outside the vehicle, the door of the vehicle may be rear hinged and provide support for the slide.

### Side clearance for single seat Easy ejector

The clearance on the side of the vehicle for the Easy Ejector in the extended position will usually be in the range of about 20 inches to 30 inches. This could be substantially less than the clearance required for opening a conventional car door. This is particularly useful for parking in areas with limited clearance.

### Easy Ejector Shock Absorber

The shock absorber provides the energy absorbing capability between the inertial mass of the vehicle and the impacting body in a side collision. It may be mounted on the ejector slide with the external face locked to or fixed to he Protector shield (below). In addition in the operating position the shock absorber will be locked to the sliding beam. Figure 3 B & C Items 13. Notably, the internal end of the ejector slide will be locked to the vehicle frame during operation.

### Easy Ejector Protector Shield

This is the' impact shield that is directly connected to the shock absorber. In most embodiments it will cover much of the side profile of the passenger. As an option the face of the Protector Shield may be hinged out to allow mounting the seat without extending or sliding out Easy Ejector for designs that use conventional doors.

### Easy Ejector Perforation shield

This provides perforation protection from sharp objects in a collision both for the passenger and the external air bag (below). It would in most embodiments be the vehicle door or the outer skin thereof.

### The Multiple functions of the Vehicle Door

As noted above, some embodiments may have several functions for the door. First as a Perforation shield for impact protection. Second as a support for the Easy Ejector Slide if necessary particularly for larger vehicles, third its conventional function to provide weather and environment protection, and finally as a mount for side impact velocity and distance detectors. To provide multiple functions the door may have double skins particularly for the Perforation shield function and the Slide Support Function.

The Door may be designed to provide support for the Easy Ejector Slide particularly for larger vehicles with multiple seats on each Easy Ejector Slide. A rear hinge will avoid obstruction to the passenger at the time of mounting and dismounting from the vehicle.

The door may function as Mount for Side impact velocity detectors.
This safety feature provides early warning to deploy the side impact external air bags. The door will have lateral velocity and distance detectors (possibly infrared) to detect lateral velocity at close proximity to fire external airbags from the Protector Shield to protect the vehicle and the passengers.

### Easy Ejector Skeletal Lock

### Mechanical coupling with Vehicle

Most embodiments will have a firm mechanical coupling of the Ejector Slide with the main structural frame of the vehicle during operation of the vehicle. This locks into the chassis and the high mass components of the vehicle to transfer the energy of impact.

### Ignition lock

The vehicle while in operation should have the Safety Beam and the Ejector Slide retracted and locked. The ignition lock may be used in some embodiments to ensure this practice.

### Safety Cage

In some embodiments, the easy ejector Protector Shield may have a fixed or retractable "Safety Cage" structure that surrounds the passenger in a vertical plane, thereby protecting the passenger in a roll over situation. The Safety Cage may be simply a retractable roll bar.

### Internal side impact airbags

Some embodiments may have internal side impact airbags that "unfurl" upwards on impact thereby protecting the passenger's body.

### Child seats Attachment.

An easy insert into the seat will be secure for seating infants and small children securely and safely. The Safety harness may also have an attachment for providing greater support for infants and small children.

### PREFERRED EMBODIMENT

This embodiment benefits from synergies of using the two aspects together. Numerous variations on this embodiment are possible. Current passenger motor vehicles use hinged doors for entry and exit for passengers and separate laterally fixed seats (no side to side movement) within the motor vehicle passenger compartment for the passengers while travelling in the vehicle. Moreover such motor vehicles do not usually have design focussed on lateral impact safety devices besides the impact protection of the side door and possibly internal side impact air bags. This embodiment - the Ejector and Crash Safety Beam -- provides the dual role of an Easy Ejector device with the Safety Indo-Skeletal Structure that provides utilitarian access to passenger vehicles and provides Safety characteristics using the Indo-Skeletal structure as noted herein. The elements of this embodiment are as follows:

### 1.1. The Slide Beam and the Easy Ejector Slide

The Slide Beam - Item 4 in Figures 3, serves the dual role of both a structural member that provides compressive strength and also the support for the Easy Ejector Slide.
The Easy Ejector Slide - Item 5 in Figures 3 B and C, slides over the Slide beam and in the operating position is locked to the main body of the vehicle Item 3 in Figures 3 B and C. In this position it provides structural strength under compression as well. The Easy Ejector Slide supports the seat (Item 7 in Figures 3 B and C) through mounts (Items 8 in Figures 3) that decouple at the time of impact. A secondary sliding design of the decoupler facilitates sliding of the seat over the Ejector Slide.
In some embodiments, the Slide Beam/Easy Ejector Slide combination may have multiple elements with multiple sets of slides and/or roller mounts.
In some embodiments the slide Beam/Easy Ejector Slide combination may have several elements that collapse together in the Operating position.

### 1.2. The Easy Ejector Seat

The Easy Ejector Seat for the passenger - Item 7 in Figures 3 B and C, is firmly mounted through decouplers (Items 8 in Figure 3 B and C) to the Easy Ejector Slide. At the time of impact the decouplers will disengage the seat to permit limited lateral movement or sliding on the Easy ejector Slide (away from the impact point).
In some variations, the Easy Ejector Seat may be designed to have multi directional movement and position adjustments for comfort as in conventional motor vehicle seats with mechanisms mounted on the decouplers.

### 1.3. Crush Prevention Seat frame

The Easy Ejector seat In some embodiments may be constructed to have both sides of the seat reinforced to prevent crushing injuries to passengers in collisions.

### 1.4. The "Pop-Out Ejector" feature

Some embodiments may have the "Pop-Out Ejector" feature that allows, under impact on one side, the unlocking of the Easy Ejector Slide on the other side and the limited movement of the seats on the decouplers, to allow the seats to slide out to a limited extent, thereby preventing the entrapment of passengers in a collision and minimizing the maximum acceleration under impact that the passengers encounter. Moreover this feature will reduce the likelihood of the body of the vehicle under impact crushing the passengers.

### 1.5. The Safety Beam

Some embodiments may have the Safety Beam - Item 6 in Figures 3 B and C. a structural member that provides compressive strength. It is mounted on the Easy Ejector Slide and in the operating position locks into the frame of the vehicle (Item 3 in Figures 3 B and C) . The shock absorber (see below) is mounted at its outside end.

### 1.6. The shock absorber

Some embodiments may have the Shock Absorber - Item 14 in Figures 3 B and C, which is mounted on the end of the Easy Slide Beam and the Safety Beam, and may support a Protector Shield.

### 1.7. The Protector Shield

Some embodiments may have a Protector Shield - Item 9 in Figures 3 B and C, provides the cover for much of the side profile of the passenger to provide impact protection at different possible contact points on impact.

### 1.8. The External Airbag

Some embodiments may have the External Airbag - Item 11 in Figures 3 B and C, that may be fired proactively with velocity/ distance sensors on the side of the vehicle. (Items 12 in Figure 3 B and C) These airbags will reduce the maximum acceleration of the passengers under impact.

### 1.9. The Perforation Shield

some embodiments may have the Perforation shield which is a thin skin that is on the outside of the vehicle protecting the external airbag from perforation and providing the cosmetic functions of the outside of the vehicle. Velocity/distance sensors may be mounted on these perforation shields.

### 1.10. The Skeletal Lock

Some embodiments may have the Skeletal Locks - Items 13 in Figures 3 B and C, provide the locking mechanism for the Easy ejector Slide, the Safety Beam and the Slide Beam.

### 1.11. Safety Cage

Some embodiments may have extensions of the protector Shield that extend over the passenger so that in the operating position these extensions engage a beam across the vehicle to prove further strength in a side impact.

### 1.12. Multi-Element contour seat

A unique characteristic of the Easy Ejector Structure is that there can be ergonomic passenger seat support on both sides of the lower body as well as behind and below as in conventional seats. The Multi-element contour seat may be customized to fit the lower body. (either with manual inserts or with computer controlled elements that can be preset for each passenger). In some embodiments such muli-element contour seats may provide lateral support in addition to what conventional passenger seats provide. This is of particular value in reducing driver fatigue on winding roads and rough terrain.

### 1.13. Gravity Slide Drive (Manual Slide)

As an alternative to an Electric power slide drive for the Easy Ejector, a Gravity Slide Drive may be used. Either of these embodiments may be preferred depending on principally cost and weight factors.

### The Gravity Slide Drive operates as follows:

The slide has two inclinations - the "operating inclination" and the "loading inclination". The operating inclination has a slight incline upwards from the center of the vehicle. This is the incline of the slide that will be locked into position during the operation of the vehicle. The weight of the passenger will draw the passenger towards the operating position in the operating inclination despite the resistance of the "loader spring" to be defined below. Note that the inclination refers to the slide mechanism that in some embodiments will be rollers. It does not refer to the inclination of the Slide Beam or the Easy Ejector Slide. These would normally be horizontal in the operating position to maximize the impact resistance.
The Loading inclination has a slight downward inclination so that the passenger's weight will slide out the seat and the slide to the extended position.
There is an "Open" button, handle or other device on the inside and the outside of the vehicle for each passenger as in conventional motor vehicles. These will be referred to as the "Inside-Open" and the "Outside-Open" buttons.

### Case A (With passenger in seat) :

From the operating position when the Inside-Open button is operated, the Slide moves and is locked to the Loading inclination and the seat slides out permitting the passenger to dismount. At the time of dismounting the release of the weight of the passenger from the slide raises and locks the Slide in the Operating Inclination when the new passenger sits on the seat the body weight of this passenger slides the seat and the slide to the Operating Position. If there is no new passenger, the empty seat may be allowed to slide under gravity to the operating position. A spring mechanism will retard this motion so that while it is easy to slide in it is not automatic.

### Case B (With no passenger in seat):

To mount the seat, the passenger will operate the Outside-Open button. This will allow the slide to be drawn out assisted by the Spring mechanism. The Slide will be in the Operating Inclination during this movement, however the spring action will ease the movement of the slide to the extended position as there is no weight of a passenger in the seat to counter.
Note that the Outside-Open button does not release the catch for the depression of the slide to the Mounting Inclination whereas the Inside-Open button does.

The various aspects and embodiments may be summarized as follows :

### FIRST ASPECT

Current passenger vehicle construction uses a "Shell" or "Exo-skeletal" paradigm that provides limited protection to passengers in lateral collisions as a result of often inadequate rigidity and strength under shear or bending stress, whereas the Safety Indo-Skeletal Structure provides better protection for passengers with economy of vehicle mass, with a structure that:
1. Targets "Impact Zones" relevant only to passenger safety in lateral or side collisions with structural elements under compression. Impact zones are defined to cover extensive parts of the side or lateral profile of passengers viewed from the outside of the vehicle. See Figure 2 A Item 15.
2. Uses compressive load bearing structural members that conduct the impact force and energy to the main inertial mass of the vehicle, thereby bypassing the passengers despite their physical location in close proximity to the impact location.
3. Decouples under sufficient impact forces, the passenger seat from the structural members bearing the impact forces thereby minimizing the maximum acceleration under impact sustained by the passengers and/or minimizing the likelihood of crushing injuries to such passengers.
4. Minimizes vehicle body weight by minimizing the vehicle body weight outside the said target Impact Zones.
5. Incorporates in some embodiments Active and/or Passive Shock Absorbers including possibly external airbags mounted on the external side of the structure defined herein to absorb the energy of impact and transfer the impact to the frame and main body of the vehicle. The Air Bags may be proactively fired with velocity and distance sensors mounted on the side of the vehicle in the event of a collision.

### SECOND ASPECT

Current passenger vehicle design incorporates seats that do not permit lateral or side movement or rotation. Such a limitation makes mounting and dismounting from the vehicle difficult particularly for the elderly and for those installing infants in the vehicle in special safety seats. Moreover, in lateral collisions this limited mobility increases the likelihood of crushing injury, and provides no mechanism for limiting the body acceleration under impact independent of that sustained by the vehicle body. The Easy Ejector provides a structure that allows utilitarian and easy mounting and dismounting from passenger vehicles. Moreover, it provides an ejector mechanism that may be activated in the event of lateral collisions. In such situations this structure could prevent crushing injury and avoid unsustainable levels of acceleration of the human body.

The Easy Ejector provides a structure that mounts one or more passenger seats on a lateral slide, extension or rotating mechanism that permits passengers to move their seats either manually or with automation from the operating position for driving or travelling position for passengers to the ejected position that is clear of but adjoining the body of the vehicle permitting easy mounting/dismounting by moving from the seated position to the standing position or vice versa. The passenger thereby mounts the vehicle by standing beside the vehicle and lowers him/her self into the seat, then retracts the Easy Ejector and is then in the driving or travelling position. Conversely to dismount the passenger or driver, Ejects the Easy Ejector and from a sitting position simply stands up beside the vehicle on the ground. This provides a new approach to avoid contortion of the body in mounting and dismounting passenger vehicles - a factor that is particularly useful for elderly and disabled passengers and drivers and for those that install infants in "Infant Car Seats" in such vehicles.

In the event of a lateral collision, the Easy Ejector seats may be decoupled to allow the passenger seats to slide away from the collision, allowing the main thrust of the impact to be borne by the vehicle body and other components of the vehicle.

### Preferred feature 1: CRUSH RESISTANT SEAT FRAME

The Easy Ejector seat is preferably constructed to have both sides of the seat reinforced to prevent crushing injuries to passengers in collisions. Conventional passenger seats do not have this facility as the entry side of the seat needs to be open for access.

### Preferred feature 2: THE "POP-OUT EJECTOR" FEATURE

The "Pop-out Ejector" feature preferably allows under impact on one side, the unlocking of the Easy Ejector Slide on the other side of the vehicle and the decoupling of the secondary slide/decoupler on the impact side to allow limited movement of the seats that allows them to slide out adequately to prevent the entrapment of passengers in a collision and minimizing the maximum acceleration under impact that the passengers encounter. Moreover this feature will' reduce the likelihood of the body of the vehicle under impact, crushing the passengers.

### Preferred feature 3:THE SAFETY BEAM

The preferably provided Safety Beam - Item 6 in Figures 3 B and C, is a structural member that provides compressive strength. It is either mounted on the Easy Ejector Slide and in the operating position locks into the frame of the vehicle (Item 3 in Figures 3 B and C) with the shock absorber and Protector Shield fixed to it on the outside end, or is mounted on the fixed Skeletal Frame and is locked into the shock absorbers and the Protector Shield in the operating position. In some embodiments the Safety Beam may be mounted behind the passenger seat.

### Preferred feature 4: THE SHOCK ABSORBER

The Shock Absorber - Item 14 in Figures 3 B and C, is preferably mounted on the end of the Ejector Slide and the Safety Beam, and may support a Protector Shield.

### Preferred feature 5: THE PROTECTOR SHIELD

A Protector Shield - Item 9 in Figures 3 B and C, prefearbly provides the cover for much of the side profile of the passenger to provide impact protection at different possible contact points on impact. The said Protector Shield may in some embodiments be hinged to allow passengers to dismount without Ejecting the Easy Ejector mechanism.

### Preferred feature 6: THE EXTERNAL AIRBAG

The preferably provided External Airbag - Item 11 in Figures 3 B,C, may be fired on/before impact. These airbags will reduce the maximum acceleration of the passengers (and the vehicle) under impact.

### Preferred feature 1: PROACTIVE LATERAL IMPACT SENSORS

Proactive velocity and distance sensors are preferably mounted on the side of the vehicle (Items 12 in Figure 3B,C), to sense impending impact to trigger the airbags in Claim 8.

### Preferred feature 8: THE PERFORATION SHIELD

The preferably provided Perforation shield is a thin skin that is on the outside of the vehicle protecting the external airbag from perforation and providing the cosmetic functions of the outside of the vehicle. Velocity/distance sensors may be mounted on these perforation shields.

### Preferred feature 9: THE SKELETAL LOCK

The Skeletal Locks - Items 13 in Figures 3 B and C, preferably provide the locking mechanism for the Ejector Slide, the Safety Beam and the Slide Beam and the other fixed members of the vehicle body.
Some embodiments may use an "ignition lock" to avoid release of the skeletal lock while the vehicle is operational. Such a lock can be conditionally disabled to permit the implementation of preferred feature 4 if desired.

### Preferred feature 10 : SAFETY CAGE

Extensions of the protector Shield preferably extend over the passenger so that in the operating position these extensions engage a beam across the top of the vehicle to provide further strength in a side impact.

### Preferred feature 11 : MULTI-ELEMENT CONTOUR SEAT

A multi- element contour seat is preferably provided. A unique feature of the Easy Ejector structure is that there can be ergonomic passenger seat support on both sides of the lower body as well as behind and below as in conventional seats. The Multi-element contour seat may be customized to fit the lower body (either with manual inserts or with computer controlled elements that can be preset for each passenger) . In some embodiments such muli-element contour seats may provide lateral support in addition to what conventional passenger seats provide. This is of particular value in reducing driver fatigue on winding roads and rough terrain.

### Preferred feature 12: SEMI RIGID SAFETY HARNESS

A Safety Harness for passengers is preferably provided. The Safety harness may be designed to lock over the lap after the passenger mounts. This can be manually locked in place with a hinged structure that locks over the lap or may be part of the fixed anchor of the Easy ejector such that the seat positions itself under and locks into the harness. The harness may in some embodiments be constructed of pliable but semi-rigid material (such as high strength nylon) to provide support in a head on collision.
A unique feature of this harness relative to conventional seat belts is that, the Harness may be installed such that it does not touch the passenger in normal operation, but provides exceptional protection under impact. The embodiment illustrated in Figure 2 B shows how the Harness covers the front of the body with a hinged mount on the interior side of the seat and a locking device on the exterior side of the seat.
Another unique feature of this harness is that it may extend over the upper body, obviating the need for a front collision airbag for the protection of the passenger.

### Preferred feature 13: SEAT INSERTS FOR CUSTOMIZATION/CHILD SEAT

Inserts for customizing the seats for individual passengers may be provided. Such customization can be for children.

### Preferred feature 14: DOOR SUPPORT FOR EJECTOR SLIDE/SLIDE BEAM

A rear hinged door that provides support for the Ejector Slide and, in some embodiments an extending section of the Slide Beam is preferably provided. This will be particularly useful for Ejector Slides that have multiple seats in larger vehicles.

### Preferred feature 15: GRAVITY SLIDE DRIVE (MANUAL SLIDE)

The Gravity Slide Drive may preferably be used for manual operation of the Ejector with Crash Safety Beam. Several variations of the following are possible.

The Gravity Slide Drive operates as follows:
The slide has two inclinations the "operating inclination" and the "loading inclination". The operating inclination has a slight incline upwards from the center of the vehicle. This is the incline of the slide that will be locked into position during the operation of the vehicle. The weight of the passenger will draw the passenger towards the operating position in the operating inclination despite the resistance of the "loader spring" to be defined below. Note that the inclination refers to the slide mechanism that in some embodiments will be rollers. It does not refer to the inclination of the Slide Beam or the Easy Ejector Slide. These would normally be horizontal in the operating position to maximize the impact resistance.

The Loading inclination has a slight downward inclination so that the passenger's weight will slide out the seat and the slide to the extended position.
There is an "Open" button, handle or other device on the inside and the outside of the vehicle for each passenger as in conventional motor vehicles. These will be referred to as the "Inside-Open" and the "Outside-Open" buttons.

### Case A (With passenger in seat):

From the operating position when the Inside-Open button is operated, the Slide moves and is locked to the Loading inclination and the seat slides out permitting the passenger to dismount. At the time of dismounting the release of the weight of the passenger from the slide raises and locks the Slide in the Operating Inclination. When the new passenger sits on the seat the body weight of this passenger slides the seat and the Slide to the Operating Position. If there is no new passenger, the empty seat may be allowed to slide under gravity to the operating position. A spring mechanism will retard this motion so that while it is easy to slide in it is not automatic.

### Case B(With no passenger in seat):

To mount the seat, the passenger will operate the Outside-Open button. This will allow the slide to be drawn out assisted by the Spring mechanism. The Slide will be in the Operating Inclination during this movement, however the spring action will ease the movement of the slide to the extended position as there is no weight of a passenger in the seat to counter.
Note that the Outside-open button does not release the catch for the depression of the slide to the Mounting Inclination whereas the' Inside-Open button does.

It will be understood that the present invention has been described above purely by way of example, and modifications of detail can be made within the scope of the invention as defined by the appended claims.

Reference numerals appearing in the claims are by way of illustration only and shall have no limiting effect on the scope of the claims.

## Claims

1. A vehicle structure for occupant protection, comprising:
- a seat having side support elements provided on both sides of the occupant;
- a laterally disposed load bearing structural member (4) arranged to provide lateral rigidity and conduct side impact force and energy to the main inertial mass of the vehicle;
- means (4,5) adapted for moving the seat in a lateral direction between an operating position attained during normal driving conditions and an extended position wherein at least part of the seat is adapted to be outside the vehicle body;
- means (13) for locking the seat in the operating position and decoupling the seat (7), in the event of a side impact collision to permit lateral movement of the seat relative to the vehicle body.

2. A structure according to claim 1, further comprising members (4,5,6) at least one of which on impact would be under compressive load.

3. A structure according to claim 2, wherein at least one such member is an ejector slide (5) adapted to move in a lateral direction between the operating and extended positions.

4. A structure according to any of the preceding claims, wherein the structure is adapted to couple the seat to the vehicle by a firm mechanical coupling (8) when in the operating position.

5. A structure according to any of the preceding claims, wherein the locking means (13) is prevented from release while the vehicle is operational.

6. A structure according to any of the preceding claims, including a further seat disposed beside the seat and movable independently of the seat.

7. A structure according to claim 6, wherein, in the event of an impact, the seat can move adjacent to the further seat.

8. A structure according to claim 6 or 7, wherein both seats are free to eject to the extent necessary to avoid crushing injury.

9. A structure according to any of Claims 6 to 8, wherein, in the event of an impact, at least one seat may be ejected on the side of the vehicle away from the impact.

10. A structure according to any of the claims 6 to 9, further comprising means for locking the further seat, and means for decoupling the seat and unlocking the further seat in response to an impact.

11. A structure according to any of the preceding claims, further comprising a means for absorbing side impact shocks (14).

12. A structure according to any of the preceding claims, further comprising an internal side impact airbag (14).

13. A structure according to any of the preceding claims, further comprising a beam adapted to be located across the top of the vehicle.

14. A structure according to any of the preceding claims, further comprising a protector shield (9) for impact protection.

15. A structure according to claim 14, wherein the protector shield extends over a substantial part of the passenger side profile.

16. A structure according to claim 14 or claim 15 as dependant on claim 22, wherein the protector shield is engageable with the beam to provide further strength in a side impact.

17. A structure according to any of the claims from 14 to 16 as dependant on claim 13, wherein the protector shield is a fixed or retractable safety cage adapted to protect the passenger in a roll over situation.

18. A structure according to claim 17, wherein the safety cage is a retractable roll bar.

19. A structure according to any of the claims 14 to 18, wherein the protector shield is adapted to move with said structure between the operating position and the extended position.

20. A structure according to any of claims 14 to 19, wherein, in the event of an impact, the seat is adapted to decouple from a part of the structure comprising the protector shield, thereby enabling the seat to move separately from the protector shield.

21. A structure according to any of the preceding claims, further comprising an external airbag (11) for side impact protection.

22. A structure according to claim 21, further comprising means for firing the external airbag before or on impact.

23. A structure according to any of the preceding claims, further comprising a perforation shield (10) for protecting the external airbag.

24. A structure according to any of the preceding claims, further comprising proactive impact sensors (12).

25. A structure according to any of the preceding claims, further comprising a safety harness.

26. A structure according to claim 25, wherein the safety harness is made of a semi-rigid material.

27. A structure according to claim 25 or claim 26, further comprising a hinged mount and a locking device for the harness.

28. A structure according to any of claims 25 to 27, wherein the harness is adapted to extend over the upper body of a passenger.

29. A structure according to any of the preceding claims, further comprising a rear hinged door adapted to provide support for the means for moving between the operating and the extended positions.

30. A structure according to any of the preceding claims, wherein the moving is sliding or extending.

31. A structure according to any of the preceding claims, wherein the means for moving comprises multiple sets of slides and/or roller mounts.

32. A structure according to any of the preceding claims, wherein the means for moving has several elements that collapse together in the operating position.

33. A structure according to any of the preceding claims, further comprising a gravity slide drive for driving the means for moving between the operating and the extended positions.

34. A structure according to claim 33, wherein the gravity slide drive comprises means for moving the gravity slide drive between an operating inclination, having an incline upwards from the center of the vehicle, and a loading inclination, having an inclination downwards from the center of the vehicle, such that the weight of a passenger will draw the passenger towards the operating position in the operating inclination, and towards the extended position in the loading inclination respectively.

35. A structure according to claim 33 or claim 34, further comprising a spring mechanism to counter the weight of the passenger.

36. A structure according to any of the preceding claims, wherein the same means is utilized to support the occupant laterally, while in the operating position and in the extended position.

37. A Structure according to any of the preceding claims, wherein the seat has a crush resistant seat frame.

38. A structure according to any of the preceding claims, wherein both sides of the seat are reinforced to prevent crushing injuries to passenger in collisions.

39. A structure according to any of the preceding claims, wherein the side support element forms part of a body cavity for the seat.

40. A structure according to any of the preceding claims wherein the seat provides lateral support for the lower body.

41. A structure according to any of the preceding claims, wherein the seat is contoured.

42. A structure according to any of the preceding claims, wherein the seat provides integrated lumbar and side support on both sides of the body.

43. A structure according to any of the preceding claims, wherein the seat is a multi-element seat.

44. A structure according to any of the preceding claims, wherein the seat is adapted to be customized for individual passengers.

45. A structure according to any of the preceding claims, further comprising an insert for customizing the seat, preferably for children.

46. A vehicle incorporating a structure according to any of the preceding claims.

47. A method for protecting occupants in a vehicle structure, comprising the steps of:
providing a seat having side support elements on both sides of the occupant;
providing a laterally disposed load bearing structural member (4) arranged to provide lateral rigidity and conduct side impact force and energy to the main inertial mass of the vehicle;
providing means (4,5) for moving the seat in a lateral direction between an operating position attained during normal driving conditions and an extended position attained at the time of occupant access to the vehicle, wherein in the extended position at least part of the seat is adapted to be outside the vehicle body; and
providing means (13) for locking the seat in the operating position and decoupling the seat (7), in the event of a side impact collision to permit lateral movement of the seat relative to the vehicle body.

## Patentansprüche

1. Eine Fahrzcugstruktur zum Schutz der Insassen, dazu gehörend:
- ein Sitz mit Seitenstützelementen auf beiden Seiten des Insassen;
- ein seitlich angebrachtes tragendes Bauelement (4) so angeordnet, dass es seitliche Steifigkeit bietet und Seitenstoßkraft und Energie zur trägen Hauptmasse des Fahrzeugs ableitet;
- Mittel (4, 5) geeignet zur Bewegung des Sitzes in einer Seitenrichtung zwischen der während normaler Fahrbedingungen vorherrschenden Fahrtstellung und einer ausgefahrenen Stellung in der zumindest ein Teil des Sitzes so beschaffen ist, dass er sich außerhalb der Fahrzeugkarosserie befindet;
- Einrichtung (13) zum Blockieren des Sitzes in der Betriebsstellung und zum Entkoppeln des Sitzes (7) im Falle eines seitlichen Aufpralls, um eine seitliche Bewegung des Sitzes in Bezug auf die Fahrzeugkarosserie zu erlauben.

2. Struktur gemäß Anspruch 1, die außerdem Bauelemente (4, 5, 6) umfasst, von denen zumindest eins bei einem Aufprall unter Druckbelastung stehen würde.

3. Struktur gemäß Anspruch 2, in der zumindest ein solches Bauelement ein Ausstoßgleitstück (5) ist, das so beschaffen ist, das es sich in seitlicher Richtung zwischen der Betriebsstellung und der ausgefahrenen Stellung bewegen kann.

4. Struktur gemäß einem der vorangehenden Ansprüche, in der die Struktur geeignet ist, den Sitz in der Betriebsstellung mittels einer festen mechanischen Kupplung (8) mit dem Fahrzeug zu verbinden.

5. Struktur gemäß einem der vorangehenden Ansprüche, in der die Blockiereinrichtung (13) nicht gelöst werden kann, solange das Fahrzeug betriebsfähig ist.

6. Struktur gemäß einem der vorangehenden Ansprüche, die einen weiteren neben dem Sitz angebrachten Sitz umfasst, der unabhängig von dem Sitz bewegt werden kann.

7. Struktur gemäß Anspruch 6, in welcher der Sitz be einem Aufprall sich neben den weiteren Sitz plazieren kann.

8. Struktur gemäß Anspruch 6 oder 7, in der beide Stize je nach Bedarf ausgeschleudert werden können, um Quetschverletzungen zu vermeiden.

9. Struktur gemäß einem der Ansprüche 6 bis 8, in der bei einem Aufprall zumindest ein Sitz auf der dem Aufprall abgewandten Seite ausgeschleudert werden kann.

10. Struktur gemäß einem der Ansprüche 6 bis 9, die auch Mittel umfasst, den weiteren Sitz zu blockieren, sowie Mittel den Sitz auszukuppeln und den weiteren Sitz in Reaktion auf einen Aufprall zu entarretieren.

11. Struktur gemäß einem der vorangehenden Ansprüche, mit einem Mittel zur Aufnahme von seitlichen Aufprallkräften (14).

12. Struktur gemäß einem der vorangehenden Ansprüche, mit einem inneren Airbag zur Aufnahme von seitlichen Aufprallkräften (14).

13. Struktur gemäß einem der vorangehenden Ansprüch mit einem quer über die Oberseite des Fahrzeugs anzubringenden Balken (Überrollschutz).

14. Struktur gemäß einem der vorangehenden Ansprüche mit einem Schutzschild (9) als Aufprallschutz.

15. Struktur gemäß Anspruch 14, in der sich det Schutzschild über einen wesentlichen Teil des Profils auf der Passagierseite erstreckt.

16. Struktur Anspruch 14 oder 15, in Abhängigkeit von Anspruch 22, in welcher der Schutzschild in den Balken eingreifen kann, um bei einem Seitenaufprall zusätzliche Stärke zu bieten.

17. Struktur gemäß einem der Ansprüche 14 bis 16, in Abhängigkeit von Anspruch 13, in welcher der Schutzschild als fester oder cinziehbarer Schtuzkäfig ausgebildet ist, um den Insassen in einer Überrollsituation zu schützen.

18. Struktur gemäß Anspruch 17, in welcher der Schutzkäfig als einziehbarer Überrollbügel ausgebildet ist.

19. Struktur gemäß einem der Ansprüche 14 bis 18, in welcher der Schutzschild zusammen mit der Struktur sich zwischen der Betriebstellung und der ausgefahrenen Stellung bewegen kann.

20. Struktur gemäß einem der Ansprüche 14 bis 19, in der, im Falle eines Aufpralls der Sitz sich von einem Strukturteil abkuppeln kann, der den Schutzschild umfasst, wodurch der Sitz in der Lage ist, sich getrennt vom Schutzschild zu bewegen.

21. Struktur gemäß einem der vorangehenden Ansprüche, die zudem einen außen angebrachten Airbag (11) umfasst zum Schutz bei einem Seiteaufprall.

22. Struktur gemäß Anspruch 21 mit einem Mittel, den außen angebrachten Airbag vor oder bei einem Aufprall auszulösen.

23. Struktur gemäß einem der vorangehenden Ansprüche, bei welcher der Schutzschild (10) perforiert ist zum Schutz des außen angebrachten Airbags.

24. Struktur gemäß einem der vorangehenden Ansprüche, die zudem vorwirkende Aufprallsensoren umfasst.

25. Struktur gemäß einem der vorangehenden Ansprüche, die zudem einen Mehrpunkt-Sicherheitsgurt umfasst.

26. Struktur gemäß Anspruch 25, in welcher der Mehrpunkt-Sicherheitsgurt aus einem halbstarren Material besteht.

27. Struktur gemäß Anspruch 25 oder Anspruch 26, die zudem eine um ein Scharnier drehbare Befestigung und eine Arretierung für den Mehrpunkt-Sicherheitsgurt aufweist.

28. Struktur gemäß einem der Ansprüche 25 bis 27, in welcher der Mehrpunkt-Sicherheitsgurt sich über den Oberkörper des Passagiers erstreckt.

29. Struktur gemäß einem der vorangehenden Ansprüche, die zudem eine mit hinteren Scharnieren versehene Klappe aufweist, die dazu dient, die zum Bewegen zwischen der Betriebsstellung und der ausgefahrenen Stellung erforderlichen Mittel zu unterstützen.

30. Struktur gemäß einem der vorangehenden Ansprüche, bei der die Bewegung gleitend oder ausfahrend ist.

31. Struktur gemäß einem der vorangehenden Ansprüche, bei der die Mittel zur Bewegung eine Reihe von Gleitschienen und/oder Rollenbefestigungen umfassen.

32. Struktur gemäß einem der vorangehenden Ansprüche, bei der die Mittel zur Bewegung aus mehreren Elementen bestehen, die in der Betriebsstellung zusammenklappen.

33. Struktur gemäß einem der vorangehenden Ansprüche, die zudem einen Schwerkraftgleitantrieb aufweist zum Antrieb der Mittel zur Bewegung zwischen der Betriebsstellung und der ausgefahrenen Stellung.

34. Struktur gemäß Anspruch 33, in welcher der Schwerkraftgleitantrieb Mittel umfasst, den Schwerkraftgleitantrieb zu bewegen und zwar zwischen einer Betriebsschrägstellung mit einer Steigung von der Fahrzeugmitte und einer Ladeschrägstellung mit einer Neigung nach unten von der Fahrzeugmitte, so dass das Gewicht eines Insassen den Insassen in der Betriebsschrägstellung zur Betriebsstellung hin, und beziehungsweise in der Ladeschrägstellung zur ausgefahrenen Stellung hin ziehen wird.

35. Struktur gemäß Anspruch 33 oder 34, die zudem einen Federmechanismus als Gegengewicht zum Insassen aufweist.

36. Struktur gemäß einem der vorangehenden Ansprüche, in der das gleiche Mittel zur Seitenabstützung des Insassen benutzt wird, sowohl in der Betriebsstellung als auch in der ausgefahrenen Stellung.

37. Struktur gemäß einem der vorangehenden Ansprüche, in welcher der Sitz ein quetschfestes Sitzgesiell besitzt.

38. Struktur gemäß einem der vorangehenden Ansprüche, in der beide Seiten eines Sitzes verstärkt sind, um Quetschverletzungen an Insassen bei Zusammenstößen zu vermeiden.

39. Struktur gemäß einem der vorangehenden Ansprüche, in welcher das Seitenabstützelement einen Teil eines Karosseriehohlraums bildet.

40. Struktur gemäß einem der vorangehenden Ansprüche, in welcher der Sitz seitliche Abstützung für den Unterkörper bietet.

41. Struktur gemäß einem der vorangehenden Ansprüche, in welcher der Sitz dem Körper angepasst ist.

42. ist. Struktur gemäß einem der vorangehenden Ansprüche, in welcher der Sitz ganzheitliche Lenden-und Seitenstützung auf beiden Körperseiten liefert.

43. Struktur gemäß einem der vorangehenden Ansprüche, in welcher der Sitz aus mehreren Elementen besteht.

44. Struktur gemäß einem der vorangehenden Ansprüche, in welcher der Sitz individuellen Insassen angepasst werden kann.

45. Struktur gemäß einem der vorangehenden Ansprüche, die zudem einen Einsatz zur Anpassung des Sitzes, insbesondere für Kinder, hat.

46. Fahrzeug, das eine Struktur gemäß einem beliebigen Anspruch der vorangehenden Ansprüche in sich vereinigt.

47. Eine Methode zum Schutz der Insassen in einer Fahrzeugstruktur, welche die folgenden Schritte umfasst:
Bereitstellung eines Sitzes mit Seitenstützung auf beiden Körperseiten des Insassen;
Bereitstellung eines seitlich angebrachten tragenden Bauelements (4), so angeordnet, dass es Seitenversteifung aufweist und Seitenstoßkraft und Energie zur trägen Hauptmasse des Fahrzeugs ableitet;
Bereitstellung von Mitteln (4, 5) zur Bewegung des Sitzes in seitlicher Richtung zwischen der während normaler Fahrbedingungen vorherrschenden Fahrtstellung und einer ausgefahrenen Stellung, die bei Zugang des Insassen zum Fahrzeug erreicht wird, wo in der ausgefahrenen Stellung zumindest ein Teil des Sitzes sich ausserhalb der Fahrzeugkarosserie befindet; und
Bereitstellung von Mitteln (13) zum Blockieren des Sitzes in der Betriebsstellung und zum Entkoppeln des Sitzes (7) im Falle eines seitlichen Aufpralls, um eine seitliche Bewegung des Sitzes in Bezug auf die Fahrzeugkarosserie zu erlauben.

## Revendications

1. Une structure véhiculaire pour la protection d'occupants, comprenant:
- une siège muni d'éléments d'appui latéral deux côtés de l'occupant;
- un membre structurel porteur (4) disposé latéralement arrangé de façon à fournir une rigidité latérale et à conduire la force et l'énergie d'impact latéral vers la masse inerte principale du véhicule;
- des moyens (4, 5) adaptés au déplacement du siège dans une direction latérale entre une position opérationnelle obtenue pendant les conditions normales de conduite et une position étendue dans laquelle au moins une partie du siège est adaptée à se trouver en dehors du châssis du véhicule;
- moyens (13) pour verrouiller le siège dans la position opérationnelle et pour découpler le siège (7) en cas d'une collision d'impact latéral afin de permettre un mouvement latéral du siège par rapport au châssis du véhicule :

2. Structure selon la revendication 1, comprenant en outre des membres (4, 5, 6) dont au moins un subirait, lors d'un impact, un effort de compression.

3. Structure selon la revendication 2, dans laquelle au moins un des membres est un glissoir éjecteur (5) adapté au déplacement dans une direction latérale entre les positions opérationnelle et étendue.

4. Structure selon une des revendications précédentes dans laquelle la structure est adaptée pour accoupler le siège au véhicule moyennant un accouplage mécanique solide (8) dans sa position opérationnelle.

5. Structure selon une des revendications précédentes dans laquelle les moyens de verrouillage (13) sont empêchés de lâcher lorsque le véhicule est opérationnel.

6. Structure selon une des revendications précédentes y compris un siège additionnel disposé à côté du siège et mobile indépendemment du siège.

7. Structure selon la revendication 6, dans laquelle, en cas d'un impact, le siège pourra se déplacer en position adjacente du siège additionnel.

8. Structure selon la revendication 6 ou 7, dans laquelle les deux sièges sont libres à s'éjecter dans la mesure nécessaire pour éviter des blessures causées par la compression.

9. Structure selon une des revendications 6 à 8, dans laquelle, en cas d'un impact, au moins un siège pourra être éjecté sur le côté du véhicule opposé de l'impact

10. Structure selon une des revendications 6 à 9, incluant en outre des moyens pour verrouiller le siège additionnel et des moyens pour découpler le siège et déverrouiller le siège additionnel suite à un impact.

11. Structure selon une des revendications précédentes incluant par ailleurs un moyen pour absorber les chocs d'impact latéral (14).

12. Structure selon une des revendications précédentes incluant par ailleurs un airbag intérieur pour impact latéral (14).

13. Structure selon une des revendications précédentes comprenant en outre une poutrelle (de retournement) adaptée à être positionnée à le plafond du véhicule.

14. Structure selon une des revendications précédentes comprenant en outre un bouclier protecteur (9) pour protection contre l'impact.

15. Structure selon la revendication 14, dans le bouclier protecteur s'étend sur une portion substantielle du profilé sur le côté passager.

16. Structure selon la revendication 14 ou 15 comme dépendant de la revendication 22, dans laquelle le bouclier protecteur est engageable avec la poutrelle pour fournir un renfort additionnel dans un impact latéral.

17. Structure selon une des revendications 14, 16, comme dépendant de la revendication 13 dans laquelle le bouclier protecteur est une cage de sécurité fixe ou rétractable adaptée pour protéger le passager dans une situation de retournement.

18. Structure selon la revendication 17, dans laquette la cage de sécurité est un arceau de sécurité rétractable.

19. Structure selon une des revendications 14 à dans laquelle le bouclier protecteur est adapté pour se déplacer avec ladite structure entre les positions opérationnelle et étendue.

20. Structure selon une des revendications 14 à 19 dans laquelle, en cas d'un impact, le siège est adapté pour se découpler d'une partie de la structure incluant le bouclier protecteur, permettant ainsi au siège de se déplacer séparément du bouclier protecteur.

21. Structure selon une des revendications précédentes comprenant en plus un airbag extérieur (11) pour la protection contre les impacts latéraux.

22. Structure selon la revendication 21, comprenant en plus des moyens pour déclencher l' airbag extérieur avant ou au moment de l'impact.

23. Structure selon une des revendications précédentes incluant aussi un bouclier à perforation (10) pour protéger l'airbag extérieur.

24. Structure selon une des revendications précédentes, incluant en outre des capteurs d'impact proactifs (12).

25. Structure selon une des revendications précédentes incluant aussi un harnais de sécurité.

26. Structure selon la revendication 25 dans laquelle le harnais de sécurité est fait d'un matériel semi-rigide.

27. Structure selon la revendication 25 ou 26 incluant aussi une fixation à charnières et un dispositif de verrouillage pour le harnais.

28. Structure selon une des revendication 25 à 27, dans laquelle le harnais est adapté pour s'étendre sur le torso d'un passager.

29. Structure selon une des revendications précédentes incluant aussi une porte à charnières en arrière adaptée pour assurer un support pour les moyens permettant le mouvement entre les positions opérationnelle et étendue.

30. Structure selon une des revendications précédentes dans laquelle le mouvement est ou glissant ou étendant.

31. Structure selon une des revendications précédentes dans laquelle les moyens permettant le mouvement comprennent des jeux multiples de glissoirs et ou de montages à rouleaux.

32. Structure selon une des revendications précédentes dans laquelle les moyens permettant le mouvement contiennent plusieurs éléments qui se replient l'un sur l'autre en position opérationnelle.

33. Structure selon une des revendications précédentes comprenant en outre un entraînement à glissoir par gravité pour positionner les moyens permettant le mouvement entre les positions opérationnelle et étendue.

34. Structure selon la revendication 33, dans laquelle l'entraînement à glissoir par gravité inclut des moyens pour mouvoir l'entraînement à glissoir par gravité entre une inclinaison opérationnelle, ayant un inclin vers le haut à partir du centre du véhicule, et une inclinaison de chargement vers le bas à partir du centre du véhicule, de façon que le poids d'un passager tire le passager vers la position opérationnelle dans l'inclinaison opérationnelle, et respectivement vers la position étendue dans l'inclinaison de chargement.

35. Structure selon la revendication 33 ou 34, incluant aussi un mécanisme à ressort pour contrebalancer le poids du passager.

36. Structure selon une des revendications précédentes dans laquelle les même moyens sont utilisés pour soutenir l'occupant latéralement, tant en position opérationnelle qu'en position étendue.

37. Structure selon une des revendications précédentes dans laquelle le siège a une armature résistant à l'écrasement.

38. Structure selon une des revendications précédentes dans laquelle les deux côtés du siège sont renforcés pour parer aux blessures de compression au passager dans une collision.

39. Structure selon une des revendications précédentes dans laquelle l'élément d'appui latéral fait partie d'une cavité du châssis pour le siège.

40. Structure selon une des revendications précédentes dans laquelle le siège fournit un appui latéral pour la partie inférieure du corps.

41. Structure selon une des revendications précédentes dans laquelle le siège est adapté au corps humain.

42. Structure selon une des revendications précédentes dans laquelle le siège offre un appui lombaire intégré et latéral sur les deux côtés du corps.

43. Structure selon une des revendications précédentes dans laquelle le siège est un siège à éléments multiples.

44. Structure selon une des revendications précédentes dans laquelle le siège est adapté pour être particularisé pour des passagers individuels.

45. Structure selon une des revendications précédentes comprenant aussi une pièce d'insertion pour particulariser le siège, de préférence pour enfants.

46. Un véhicule incorporant une structure selon une des revendications précédentes.

47. Une méthode pour protéger les occupants une structure de véhicule comprenant les étapes de :
fournir un siège ayant des éléments d'appui latéral sur les deux côtés de l'occupant;
fournir un membre structurel (4) porteur (4) disposé latéralement et arrangé de façon à fournir une rigidité latérale et à conduire la force et l'énergie d'impact latéral vers la masse inerte principale du véhicule;
fournir des moyens (4,5) pour déplacer le siège dans une direction latérale entre une position opérationnelle obtenue pendant les conditions normales de conduite et une position étendue obtenue au moment d'accès de l'occupant au véhicule où, dans la position étendue, au moins une partie du siège est adaptée pour se trouver à l'extérieur du châssis du véhicule; et
fournir des moyens (13) pour verrouiller le siège dans la position opérationnelle et pour découpler le siège (7) en cas d'une collision avec impact latéral pour permettre un mouvement latéral du siège par rapport au châssis du véhicule.
